# EUROPÄISCHE PATENTSCHRIFT

(11) **EP 3 261 902 B1**
(45) Veröffentlichungstag und Bekanntmachung des Hinweises auf die Patenterteilung: **24.10.2018**
(21) Anmeldenummer: 16702154.2
(22) Anmeldetag: 02.02.2016
(51) Int. Cl.: B62D 1/184, F16F 7/06

(54) **FESTSTELLVORRICHTUNG FÜR EINE VERSTELLBARE LENKSÄULE FÜR EIN KRAFTFAHRZEUG**
LOCKING DEVICE FOR AN ADJUSTABLE STEERING COLUMN FOR A MOTOR VEHICLE
DISPOSITIF DE BLOCAGE D'UNE COLONNE DE DIRECTION RÉGLABLE DE VÉHICULE AUTOMOBILE

(30) Priorität: 27.02.2015 DE 102015203541
(43) Veröffentlichungstag der Anmeldung: 03.01.2018
(73) Patentinhaber: ThyssenKrupp Presta AG, 9492 Eschen (LI); thyssenkrupp AG, 45143 Essen (DE)
(72) Erfinder: PRAWDA, Martin, Shinjuku-ku Tokio 160-0023 (JP); SHEARER, Daniel, 7415 Rodels (CH)
(74) Vertreter: thyssenkrupp Intellectual Property GmbH
(86) Internationale Anmeldenummer: PCT/EP2016/052125
(87) Internationale Veröffentlichungsnummer: WO 2016/134927

(56) Entgegenhaltungen:
- WO-A1-2013/107486
- DE-A1-102011 055 410

## Beschreibung

### Stand der Technik

Die Erfindung betrifft eine Feststellvorrichtung für eine verstellbare Lenksäule für ein Kraftfahrzeug, mit einer um eine Drehachse drehbar gelagerten Betätigungswelle, die mit einem Wirkelement einer Klemmvorrichtung verbunden ist und die mit einem Rotor eines Rotationsdämpfers gekoppelt ist, wobei der Rotor in einem Gehäuse drehbar gelagert ist und der mittels der Betätigungswelle um eine Rotorachse drehend antreibbar ist, wobei eine Drehbewegung des Rotors in zumindest einer Drehrichtung gedämpft ist, wobei der Rotationsdämpfer als trockener Rotationsdämpfer ausgebildet ist.

Im Stand der Technik sind verstellbare Lenksäulen bekannt, bei denen eine Manteleinheit einer Lenksäule, in der die Lenkspindel einer Lenkwelle drehbar gelagert ist, zwischen den beiden Seitenwangen eines karosseriefest angebrachten Konsolenteils lösbar feststellbar ist. Die Feststellung erfolgt, indem die Seitenwangen durch Betätigung einer Feststell- oder Klemmvorrichtung gegeneinander bewegt werden, so dass eine im Wesentlichen kraftschlüssige Einspannung der Manteleinheit erfolgt. Wird die Feststellvorrichtung gelöst, kann die Position der Manteleinheit und damit des am hinteren Ende der Lenkwelle angebrachten Lenkrads relativ zur Fahrerposition verstellt werden.

In bekannten Feststellvorrichtungen erfolgt die Betätigung zum Feststellen und Lösen durch Drehung einer Betätigungswelle über einen daran angebrachten Betätigungshebel. Eine derartige Feststellvorrichtung ist beispielsweise in der DE 10 2011 055 410 A1 beschrieben, bei der ein erster Nockenträger drehfest auf einer Seitenwange angeordnet ist und ein zweiter Nockenträger mit gegen den ersten Nockenträger gerichteten Nocken an der Betätigungswelle angebracht ist. Durch eine Verdrehung der Betätigungswelle aus einer Winkelstellung, in der die Nocken des einen Nockenträgers zwischen die Nocken des anderen Nockenträgers eingreifen, in eine relative Winkelposition, in der die Nockenspitzen gegeneinander anliegen, werden die Nockenträger voneinander abgehoben. Dieser Hub kann durch Abstützung gegen ein am Konsolenteil angeordnetes axiales Widerlager der Betätigungswelle dazu genutzt werden, die besagten Seitenwangen des Konsolenteils gegeneinander zusammen zu drücken. Alternativ können auch andere Mechanismen zum Einsatz kommen, die eine Umsetzung der Drehbewegung der Betätigungswelle in eine translatorische Verspannung der Seitenarme erlauben, beispielsweise Keilscheiben-Nocken- oder Kippstift-Klemmsysteme, wie aus der DE 44 00 306 A1 bekannt, oder dergleichen.

Dadurch, dass in den bekannten Klemmsystemen die zur Verspannung gegeneinander beweglichen Teile, beispielsweise die Nockenträger, mechanisches Spiel aufweisen, kann der Betätigungshebel vibrieren und unerwünschte Klappergeräusche erzeugen. Außerdem wirkt beim Lösen der Klemmung eine Rückstellkraft auf den Betätigungshebel, die zu einem ebenfalls unerwünschten Zurückschnappen des Betätigungshebels führen kann. Beiden unerwünschten Effekten wird in der DE 10 2011 055 410 A1 dadurch begegnet, dass die Betätigungswelle mit einer Dämpfungseinrichtung verbunden ist, die eine Drehung der Betätigungswelle um ihre Drehachse in zumindest einer Drehrichtung dämpft. Dadurch werden Vibrationen und Geräusche verringert, und es ergibt sich eine vergleichmäßigte, gebremste Bewegung des Betätigungshebels.

Zur Realisierung der Dämpfungseinrichtung wird in der DE 10 2011 055 410 A1 die Verwendung eines Dreh oder Rotationsdämpfers vorgeschlagen mit einem Rotor, dem bei einer Drehung um seine Rotorachse mechanische Rotationsenergie entzogen wird, der also gebremst bzw. gedämpft ist. Hierzu ist der Rotor um seine Rotorachse drehbar in einem Gehäuse gelagert, das mit einem hochviskosen Dämpfungsfluid gefüllt ist, welches bei einer Drehung des Rotors verdrängt wird und dabei durch innere Reibung und Grenzflächenreibung die Drehbewegung des Rotors bremst.

Vorteilhaft an dem bekannten Rotationsdämpfer ist die definierte und zuverlässige Funktion. Nachteilig ist jedoch die relativ aufwendige Bauweise, bei der das Gehäuse und die Rotorwelle gegen das flüssige Fluid abgedichtet werden muss. Außerdem soll die Verwendung von Flüssigkeiten im Fahrzeuginnenraum grundsätzlich soweit wie möglich vermieden werden.

Aus der WO 2013/107486 A1 ist eine Feststellvorrichtung der eingangs genannten Art, wie auch im Oberbegriff des unabhängigen Anspruchs dargestellt, bekannt. Der darin beschriebene Rotationsdämpfer ist zwar effektiv, die Einstellung der Dämpfung ist jedoch begrenzt und aufwendig.

Angesichts der vorangehend erläuterten Problematik ist es eine Aufgabe der vorliegenden Erfindung, eine Feststellvorrichtung mit einem verbesserten Rotationsdämpfer anzugeben, bei dem die Dämpfung mit einfachen Mitteln in einem weiten Bereich eingestellt werden kann und der weniger aufwendig in der Herstellung ist und eine hohe Akzeptanz im Kraftfahrzeugbau hat.

### Darstellung der Erfindung

Zur Lösung der vorgenannten Problematik wird erfindungsgemäß vorgeschlagen, dass der Rotor zumindest eine bezüglich der Rotorachse radial abstehende Lamelle hat, an der eine Kontaktfläche ausgebildet ist, welche reibschlüssig eine Kontaktbahn auf einer Innenfläche des Gehäuses kontaktiert, wobei die Dämpfung durch die trockene Reibung der Kontaktfläche auf der Kontaktbahn bestimmt ist. Erfindungsgemäß wird in einer gattungsgemäßen Feststellvorrichtung zum Abbremsen und Vergleichmäßigen der Bewegung des Betätigungshebels ein Rotationsdämpfer eingesetzt, bei dem die Drehbewegung des Rotors innerhalb des Gehäuses gebremst wird. Dadurch bleibt in vorteilhafter Weise wie im Stand der Technik gewährleistet, dass der Rotor gegen Umgebungseinflüsse geschützt untergebracht ist. Im Gegensatz zum Stand der Technik ist jedoch die Verwendung eines flüssigen Dämpfungsfluids nicht erforderlich, es wird nämlich prinzipiell keine Flüssigkeit zur Dämpfung eingesetzt. Dadurch fallen zum einen keine durch das flüssige Fluid bedingten Kosten und Akzeptanzprobleme an, und zum anderen ist der Aufwand zur Konstruktion und Herstellung eines erfindungsgemäß trockenen Rotationsdämpfers deutlich geringer als im Stand der Technik, allein schon durch den Wegfall von Dichtungsmaßnahmen.

Im Einzelnen basiert das Funktionsprinzip des erfindungsgemäßen Rotationsdämpfers darauf, dass ein auf den Rotor wirkendes Bremsmoment durch Grenzflächenreibung zumindest einer Kontakt- oder Reibfläche, die mit radialen Abstand zur Rotorachse an einer Lamelle, anders ausgedrückt einem Rotorarm, des Rotors ausgebildet ist und an einer umlaufenden Kontaktbahn auf der Innenseite des Gehäuses anliegt. Die Kontaktbahn erstreckt sich durchgehend über den gesamten inneren Umfang des Gehäuses. Eine Drehung des Rotors um die Rotorachse führt dazu, dass die besagte Kontaktfläche ununterbrochen auf der Kontaktbahn trocken entlanggleitet, wobei durch die Grenzflächenreibung zwischen den trocken gegeneinander anliegenden Oberflächen von Kontaktfläche und Kontaktbahn Rotationsenergie in Wärme umgesetzt wird, und folglich eine Abbremsung des Rotors erfolgt. Dadurch, dass die Betätigungswelle der Klemmvorrichtung in an sich bekannter Weise drehmomentschlüssig mit der Rotorwelle gekoppelt ist, beispielsweise durch kraftschlüssige Anbringung auf der Betätigungswelle oder Zwischenschaltung von Getrieberädern, kann eine effektive Dämpfung der Drehbewegung der Betätigungswelle realisiert werden.

Erfindungsgemäß stehen die Lamellen bei einer Drehung des Rotors um die Rotorachse mit ihren Kontaktflächen ununterbrochen mit der umlaufenden Kontaktbahn auf der Innenseite des Gehäuses in trocken reibendem Kontakt. Dabei ist es für die Erfindung wesentlich, dass das Gehäuse keine Flüssigkeit enthält, d.h. völlig frei von flüssigem Dämpfungsfluid ist. Dadurch ist gewährleistet, dass keine Verwendung von Flüssigkeiten im Fahrzeuginnenraum erfolgt. Außerdem ist sichergestellt, dass die erfindungsgemäß vorgegebene Reibungskraft, die durch die ausschließlich trockene Reibung der Kontaktflächen auf der Kontaktbahn vorgegeben wird, durch Flüssigkeit beeinträchtigt wird. Die Dämpfung ist dadurch ausschließlich durch mechanische, trockene Reibung der Kontaktflächen auf der Kontaktbahn bestimmt.

Das durch die Reibung der Kontaktfläche auf der Kontaktbahn als Dämpfung auf den Rotor ausgeübte Bremsmoment ist im Wesentlichen abhängig von der Größe der Kontaktfläche, der Oberflächenstruktur und den Materialien von Kontaktfläche und Kontaktbahn, und von der relativen Flächenpressung, d.h. der Kraft pro Fläche, die über die Kontaktfläche auf die Kontaktbahn ausgeübt wird. Durch gezielte Variation dieser Parameter ist es möglich, mit geringem Aufwand eine Dämpfungswirkung in weiten Grenzen individuell einzustellen.

Vorzugsweise ist eine Mehrzahl von Lamellen über den Umfang des Rotors gleichmäßig verteilt angeordnet. Dadurch wird eine sternförmige Anordnung gebildet, bei der die Lamellen ähnlich wie die Speichen einer Felge an der Rotorachse befestigt sind und mit den mit Abstand von der Rotorachse ausgebildeten Kontaktflächen an einer Innenfläche des Gehäuses reibend entlanggleiten. Hierbei ist es vorteilhaft, dass das Gehäuse den Rotor zumindest annähernd staubdicht umschließt, so dass das Eindringen von Verunreinigungen zwischen Kontaktfläche und Kontaktbahn verhindert oder zumindest erschwert wird. Eine derartige geschlossene Ausbildung des Gehäuses ist auf jeden Fall mit geringerem Aufwand zu bewerkstelligen als die im Stand der Technik erforderliche, dauerhaft fluiddichte Ausführung.

Eine praktische Ausführung der Erfindung kann dadurch besonders rationell erfolgen, dass der Rotor und/oder das Gehäuse als Kunststoff-Spritzgussteile ausgebildet sind. Derartige Kunststoffteile lassen sich mit hoher Präzision in großen Stückzahlen kostengünstig herstellen, wobei durch weitgehende Gestaltungsfreiheit der Form von Rotor und Gehäuse und die Auswahl der verwendeten Kunststoffe eine optimierte Anpassung an die geforderten Reibungseigenschaften erfolgen kann.

Eine vorteilhafte Ausführung der Erfindung sieht vor, dass die Kontaktbahn auf einer den Rotor umgebenden inneren Mantelfläche ausgebildet ist, die eine im Wesentlichen zylindrische, zur Rotorachse koaxiale Grundform hat. Unter im Wesentlichen zylindrisch werden Querschnittsveränderungen von ±25% gegenüber einem nominellen mittleren Querschnittsmaß, beispielsweise einem mittleren Durchmesser. In dieser Ausführung sind die Kontaktfläche oder Kontaktflächen an der oder den Lamellen auf einer äußeren Mantelfläche des Rotors ausgebildet, die ebenfalls eine im Wesentlichen zylindrische, zur Rotorachse koaxiale Grundform hat, so dass jede Kontaktfläche radial von innen an der Kontaktbahn anliegt. Bei dieser Ausführung wird eine Konfiguration gebildet, die einer Trommelbremse ähnelt. Dabei fungiert das Gehäuse als Bremstrommel mit einer innen zylindrisch umlaufenden Reibungs- bzw. Bremsfläche - der Kontaktbahn - wobei am äußeren radialen Ende der Lamellen eine oder mehrere Kontaktflächen angeordnet sind, die wie die Bremsbacken einer Trommelbremse in radialer Richtung von innen gegen Kontaktbahn des die Bremstrommel bildenden Gehäuses angedrückt werden. Anhand dieser Analogie ist auch ohne weiteres erkennbar, dass die Bremswirkung abhängig ist vom Anpressdruck der Kontaktflächen an die Kontaktbahn. Darüber hinaus können auch die bekannten Vorteile realisiert werden, wie zuverlässige Funktion und langfristig wartungsarmer Betrieb.

Eine vorteilhafte Ausführung der Erfindung sieht vor, dass die Kontaktbahn auf einer den Rotor umgebenden inneren Mantelfläche ausgebildet ist, die eine konische, zur Rotorachse koaxiale Grundform hat. Eine entsprechende konische Grundform kann auch als kegelförmig oder kegelstupfförmig bezeichnet werden und weist dabei einen ersten Durchmesser und axial davon beabstandeten zweiten Durchmesser auf, wobei der erste und der zweite Durchmesser die innere Mantelfläche in Rotorachsen-Richtung begrenzt und der erste Durchmesser grösser oder kleiner als der zweite Durchmesser ist.

In dieser Ausführung sind die Kontaktfläche oder Kontaktflächen an der oder den Lamellen auf einer äußeren Mantelfläche des Rotors ausgebildet, die ebenfalls eine konische, zur Rotorachse koaxiale Grundform hat, so dass jede Kontaktfläche radial von innen an der Kontaktbahn anliegt. Bei dieser Ausführung wird eine Konfiguration gebildet, die einer konischen Trommelbremse ähnelt. Dabei fungiert das Gehäuse als Bremstrommel mit einer innen konisch, auch kegelförmig genannt, umlaufenden Reibungs- bzw. Bremsfläche - der Kontaktbahn - wobei am äußeren radialen Ende der Lamellen eine oder mehrere Kontaktflächen angeordnet sind, die wie die Bremsbacken einer Trommelbremse in radialer Richtung von innen gegen Kontaktbahn des die Bremstrommel bildenden Gehäuses angedrückt werden. Besonders bevorzugt ist der Wert des Kegelwinkels, welcher dem doppelten des halben Öffnungswinkels entspricht, zwischen 2° und 20°, ganz besonders bevorzugt zwischen 5° und 10°.

In einer vorteilhaften Weiterbildung weist zumindest eine Lamelle eine sich in Richtung der Rotorachse verändernde Wandstärke auf. Dabei ist Wandstärke orthogonal zur Rotorachse betracht und beschreibt somit die Dicke der Lamelle. Durch diese sich verändernde Wandstärke kann die Bremswirkung gezielt an die vorhanden Anforderungen angepasst werden.

Besonders vorteilhaft ist es, dass die Lamelle zumindest ein Federelement umfasst, welches die Kontaktfläche gegen die Kontaktbahn vorspannt. Das Federelement übt eine Federkraft auf die Kontaktfläche aus, mit der diese gegen die Kontaktbahn angedrückt wird, so dass unter Berücksichtigung der Größe der Kontaktfläche eine definierte Flächenpressung und damit eine Reibungskraft vorgegeben werden kann, wodurch wiederum die Dämpfung vorgegeben werden kann. In der vorangehend beschriebenen Ausführung mit dem trommelartigen Gehäuse wirkt die Federkraft von der Rotorachse aus gesehen radial nach außen und drückt die am radial äußeren Ende der jeweiligen Lamelle angeordnete Kontaktfläche radial von innen gegen die Kontaktbahn. Durch Vorgabe der Federkonstante des Federelements und der radialen Einfederung, also dem Weg, um den das Federelement beim Einsetzen des Rotors in das Gehäuse aus dem unbelasteten Zustand in radialer Richtung zusammengedrückt werden muss, ergibt sich die Kraft, mit der die jeweilige Kontaktfläche radial gegen die Kontaktbahn angepresst wird. Dadurch kann die Brems- bzw. Dämpfungswirkung des Rotationsdämpfers vorgegeben werden.

In einer bevorzugten Ausführung ist die Lamelle im Bereich zwischen der Rotorachse und der Kontaktfläche als Blattfeder ausgebildet, welche sich zumindest abschnittweise relativ zu einer Radialrichtung in einer ersten Umfangsrichtung geneigt erstreckt. Unter einer Blattfeder wird hier ein langgestrecktes Federelement verstanden, welches quer zu seiner Längserstreckung elastisch auf Biegung beansprucht werden kann. Entsprechend der Ausführung weist die Blattfeder zumindest einen Teilbereich auf, der einen von der Rotorachse ausgehenden Radius mit Abstand zur Rotorachse in einem Neigungswinkel kleiner als 180° schneidet. Mit anderen Worten liegt der besagte Teilabschnitt bezüglich eines koaxialen Umkreises des Rotors eine Sekante, die bezüglich eines Durchmessers des Rotors gegen die erste Umfangs- oder Drehrichtung abgewinkelt ist. In ihrem radialen Endbereich ist an der Blattfeder die Kontaktfläche angebracht, die bezüglich des Umkreises des Rotors, der mit der konischen, auch kegelförmig genannt, Kontaktbahn auf der Innenseite des Gehäuses zusammenfällt, in Umfangsrichtung verläuft, d.h. tangential. Folglich schließt das radiale äußere Ende der Blattfeder in Richtung des vorgenannten Neigungswinkels einen stumpfen Winkel kleiner als 90° mit der tangentialen Kontaktfläche bzw. der dort an der Kontaktbahn anliegenden Tangente ein.

Die vorangehend beschriebene geneigte Anordnung der Blattfeder hat zur Folge, dass zum einen durch eine Biegebeanspruchung der Blattfeder eine radial nach außen gerichtete Federkraft auf die Kontaktfläche ausgeübt werden kann, wenn die Blattfeder hinreichend lang bemessen ist. Zum anderen übt eine Reibungskraft, die bei einer Drehung in der ersten Umfangs- bzw. Drehrichtung aufgrund der Reibung zwischen Kontaktfläche und Kontaktbahn auftritt und entgegen der ersten Umfangsrichtung wirkt, aufgrund der vorangehend erläuterten schrägen Anordnung eine radiale Kraftkomponente auf die Blattfeder aus. Diese radiale Kraftkomponente addiert sich zur im Ruhezustand anliegenden radialen Komponente der Federkraft, so dass im Effekt eine Erhöhung der Radialkraft auftritt, mit der die Kontaktfläche gegen die Kontaktbahn angedrückt wird. Entsprechend entsteht eine höhere Reibung und damit ein höheres Brems- bzw. Dämpfungsmoment. Das Bremsmoment ist damit geschwindigkeitsabhängig, so dass eine effektive Dämpfungswirkung erreicht wird.

Wird hingegen der Rotor entgegen der ersten Drehrichtung in einer zweiten oder Rück-Drehrichtung gedreht, wirkt die durch die Reibung auf die Kontaktfläche ausgeübte Radialkraftkomponente in entgegengesetzter Richtung, die effektiv auf die Kontaktfläche gegen die Kontaktbahn wirkende Federkraft wird entsprechend reduziert. Folglich ist das Brems- bzw. Dämpfungsmoment in Rückdrehrichtung kleiner als in Drehrichtung, so dass effektiv ein Freilauf in Rückdrehrichtung realisiert wird. Mit anderen Worten erfolgt die Dämpfung der an den Rotor gekoppelten Betätigungswelle in einer Vorzugs-Drehrichtung.

In der Praxis soll die Bewegung der Betätigungswelle stärker gedämpft sein, wenn der Betätigungshebel von der Feststellposition in die Löseposition der Betätigungswelle bewegt wird, d.h. beim Lösen der Feststellvorrichtung zur Verstellung der Lenkradposition wird der Betätigungshebel in der vorgenannten Drehrichtung bewegt, entsprechend in Rückdrehrichtung beim Feststellen.

Die Kontaktfläche kann am äußeren Ende relativ zur radialen Erstreckung der Lamelle in einer ersten Umfangsrichtung bogenförmig abgewinkelt angebracht sein. Dadurch wird erreicht, dass Neigung der Lamelle ausgeglichen wird und die Kontaktfläche radial an der Kontaktbahn anliegt.

Die vorangehend beschriebene Neigung der Blattfeder kann durch einen abgewinkelten Verlauf realisiert werden. Alternativ ist es möglich, dass die Lamelle in Form eines zur ersten Umfangsrichtung hin offenen Bogens ausgebildet ist. Dabei handelt es sich um eine bogenförmige Blattfeder, die im Prinzip angesehen werden kann als Abfolge von gegen die Radialrichtung geneigten Abschnitten. Durch Zusammendrücken der Enden des Bogens kann eine federnde Radialkraft auf die am äußeren Ende angebrachten Kontaktfläche ausgeübt werden, die wie vorangehend erläutert bei Drehung in der ersten Drehrichtung verstärkt, und bei entgegengesetzter Drehung in Rückdrehrichtung verringert wird. Die bogenförmige Ausbildung sorgt für eine gleichmäßige Biegebelastung über die radiale Erstreckung der Blattfeder, wodurch die langfristige Haltbarkeit verbessert wird.

Eine Ausbildung der Lamelle bzw. Lamellen als Blattfeder kann besonders gut als Kunststoff-Spritzgussteil erfolgen, wobei die vorangehend beschriebene Bogenform die Materialeigenschaften besonders gut ausnutzt. Weiterhin ist es denkbar und möglich, die Lamellen zumindest teilweise aus einem Elastomer auszubilden. Beispielweise kann zumindest eine Noppe zur Ausbildung der Kontaktfläche auf der Lamelle angeordnet sein, wobei diese Noppe mit der Kontaktbahn zusammenwirkt. Als Noppe ist ein Vorsprung zu verstehen, der im Wesentlichen einer Halbkugel entspricht. Dadurch kann eine noch verbesserte Bremswirkung erzielt werden.

Weiterhin ist es vorteilhaft, dass die Kontaktfläche im Querschnitt bogenförmig ausgebildet ist, wobei der Bogen zur Rotorachse hin offen ist und einen kleineren Biegeradius hat als die Kontaktbahn. Dadurch wird eine schmale, sich im Wesentlichen parallel zur Rotorachse erstreckende Kontaktfläche realisiert, die sicher an der bogenfömigen Kontaktbahn anliegen kann. Außerdem kann die geschwungene Bogenform in Dreh- und Rückdrehrichtung gut auf der Kontaktbahn entlanggleiten, ohne zu verhaken oder zu verkanten. Unter im Wesentlichen parallel zur Rotorachse wird eine Abweichung von ±15° verstanden.

Es ist weiter denkbar und möglich, dass auf der Kontaktbahn radial nach innen vorstehende Strukturelemente ausgebildet sind. Dabei kann die Kontaktbahn beispielsweise als mit Vorsprüngen und/oder Vertiefungen versehene Kulissenfläche ausgebildet sein, auf denen die Kontaktfläche bei einer Drehung des Rotors entlanggleitet. Durch die Vorsprünge bzw. Vertiefungen kann beispielsweise eine Rastung vorgegeben werden, welche die Bremseigenschaften beeinflusst oder auch haptisch als angenehm empfunden wird. In Vertiefungen können federnde Lamellen im unbelasteten Ruhezustand eintauchen, so dass die radiale Vorspannung verringert wird, was insbesondere bei Kunststoff-Federelementen einem dauerhaften Setzen der Feder entgegenwirkt und dadurch die Lebensdauer erhöht.

Der Rotor kann drehfest auf der Betätigungswelle angebracht sein. In diesem Fall erfolgt die Dämpfung des Rotors unmittelbar über den Verdrehwinkel des Betätigunghebels zwischen der Feststell- und Löseposition der Betätigungswelle, in der Praxis ist dies ein Wert zwischen 35° und 55°, bevorzugt etwa 45°. Alternativ ist es denkbar und möglich, dass auf dem Rotor ein zweites Getrieberad drehfest angebracht ist, welches mit einem ersten Getrieberad in Eingriff steht, wobei das zweite Getrieberad relativ zu dem ersten Getrieberad mittels der Betätigungswelle drehend antreibbar ist. Dadurch kann eine Übersetzung erfolgen, so dass bei einer Verschwenkung des Betätigungshebels beispielsweise um 45° der Rotor um 160° bis 180° gedreht wird. Durch die Übersetzung wird das Bremsmoment und damit die Dämpfungswirkung des Rotationsdämpfers entsprechend verstärkt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in Seitenansicht mit abgenommenem Betätigungshebel,
- Figur 2: eine teilweise Ansicht eines Betätigungshebels,
- Figur 3: eine Axialansicht eines Getrieberads gemäß Figur 1,
- Figur 4: eine perspektivische Ansicht des Getrieberads gemäß Figur 3,
- Figur 5: eine Vorderansicht auf einen erfindungsgemäßen Rotationsdämpfers in Axialrichtung der Rotorachse,
- Figur 6: der Rotationsdämpfer gemäß Figur 5 in auseinandergenommenem Zustand,
- Figur 7: eine Vorderansicht auf den Rotationsdämpfer in Axialrichtung der Rotorachse gemäß Figur 5 mit abgenommenen Gehäusedeckel,
- Figur 8: eine schematische vergrößerte Ansicht des Rotors mit abgenommenen Getrieberad wie in Figur 7,
- Figur 9: eine Ansicht wie in Figur 7 auf einen Rotationsdämpfer in einer zweiten Ausführungsform,
- Figur 10: eine perspektivische Ansicht des Rotationsdämpfers gemäß Figur 9,
- Figur 11: eine perspektivische Ansicht des Rotors aus der Figur 10,
- Figur 12: eine perspektivische und auseinandergezogene Ansicht einer Klemmvorrichtung mit erfindungsgemässem Rotationsdämpfer in einer alternativen Anordnungsform,
- Figur 13: eine perspektivische Ansicht des Rotationsdämpfers gemäß Figur 13.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

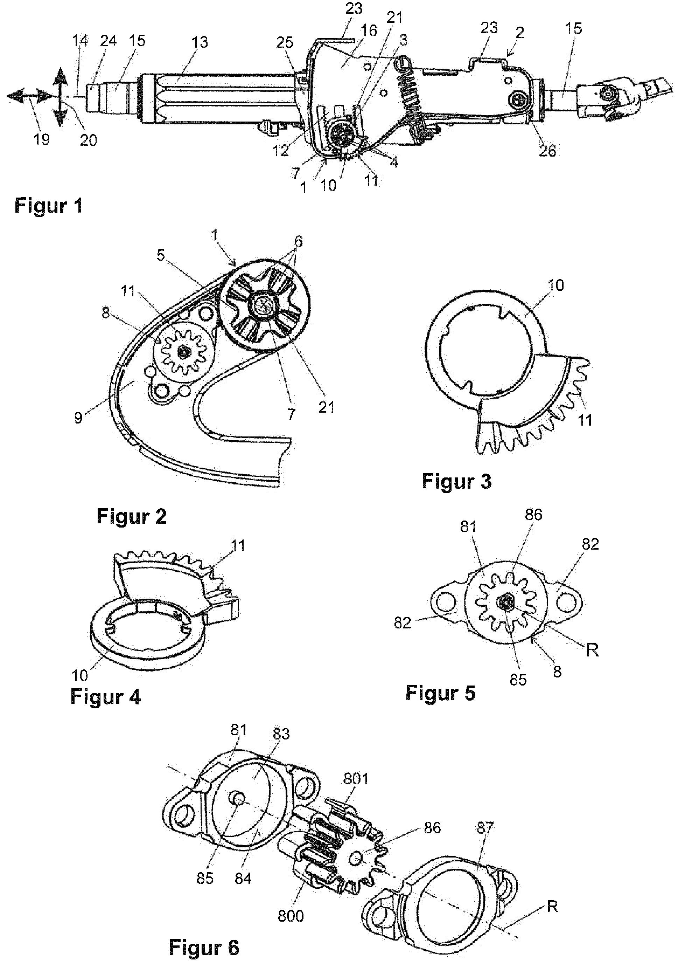

Figur 1 zeigt eine erfindungsgemäße Feststellvorrichtung 1 an einer Lenksäule 2 in einer Seitenansicht.

Die Lenksäule 2 weist ein Konsolenteil 16 auf, welches mittels Befestigungslaschen 23 an einer hier nicht dargestellten Karosserie eines Kraftfahrzeugs befestigt werden kann. Über das Schwenkgelenk 26 ist eine Kastenschwinge 25, auch als äußere Manteleinheit 25 bezeichnet, am Konsolenteil 16 angeordnet. Durch Verschwenken der Kastenschwinge 25 relativ zum Konsolenteil 16 um das Schwenkgelenk 26 kann eine Höhenverstellung in Höhenverstellrichtung 20 erzielt werden. In der Kastenschwinge 25 ist die Manteleinheit 13 gelagert. Diese Manteleinheit 13 kann entlang der Längsachse 14 einer Lenkspindel 15 - also in den Längsverstellrichtungen 19 - relativ zur Kastenschwinge 25 und damit zum Konsolenteil 16 verschoben werden. Im gezeigten Ausführungsbeispiel ist somit sowohl eine Höhen- als auch eine Längenverstellung eines hier nicht dargestellten Lenkrads möglich, welches in der vorliegenden Darstellung am Lenkradanschluss 24 der Lenkspindel 15 montiert werden kann. Eine Verstellmöglichkeit existiert im Normalbetrieb abgesehen vom Crashfall aber nur dann, wenn die Feststellvorrichtung 1 sich in ihrer Öffnungsstellung bzw. Löseposition befindet. Befindet sich die Feststellvorrichtung 1 in ihrer Schließstellung bzw. Feststellposition, so ist die Position der Manteleinheit 13 relativ zum Konsolenteil 16 und damit relativ zur Karosserie des Fahrzeugs festgelegt. In der Manteleinheit 13 ist die Lenkspindel 15 um ihre Längsachse 14 drehbar gelagert. Die Feststellvorrichtung 1 kann in ihrer Schließstellung mittels Formschluss und/oder aber auch mittels Reibschluss bzw. Kraftschluss für eine entsprechende Festlegung der Manteleinheit 13 relativ zum Konsolenteil 16 sorgen. Entsprechende form- und/oder kraftschlüssige Klemmsysteme sind im Stand der Technik bekannt.

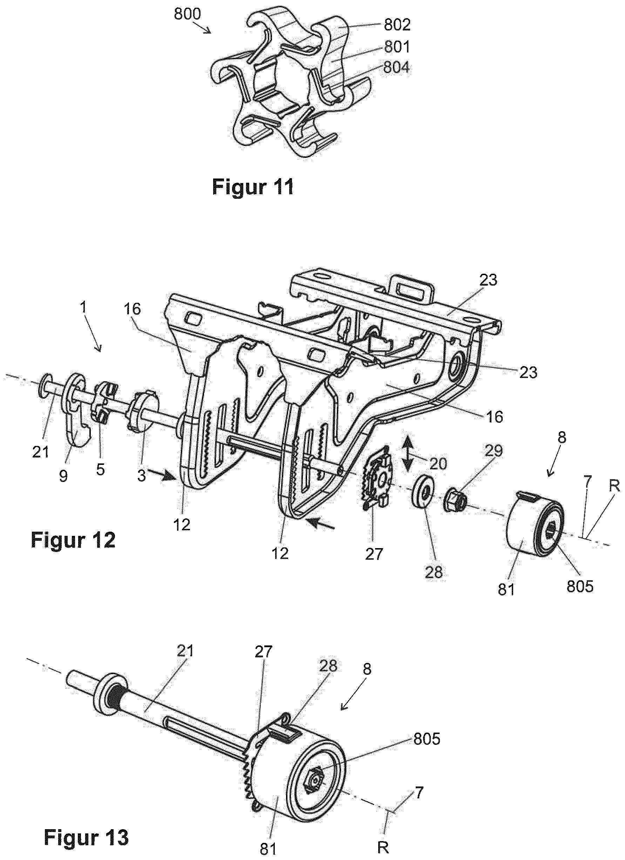

Die hier gezeigte Feststellvorrichtung 1 weist eine an sich bekannte, hier im Querschnitt erkennbare Betätigungswelle 21 auf. Diese Betätigungswelle 21 ist in Richtung normal zur Blattebene gemäss Figur 1 durch die gegenüberliegenden Seitenwangen 12 des Konsolenteils 16 hindurchgeführt und auf einer gegenüberliegenden, hier nicht sichtbaren Seite des Konsolenteils 16 mittels einer Mutter oder dgl. am Konsolenteil 16 gehalten. Auf der sichtbaren Seite ist auf der Betätigungswelle 21 der erste Nockenträger 3 mit seinen Nocken 4 angeordnet. Der zweite Nockenträger 5 samt seiner Nocken 6 und dem Betätigungshebel 9 ist in Figur 1 abgenommen und in Figur 2 separat dargestellt. In der fertig montierten Stellung sind die beiden genannten Nockenträger 3 und 5 auf der Betätigungswelle 21 derart angeordnet, dass sie relativ zueinander um die Drehachse 7 verdrehbar sind und die Nocken 4 des ersten Nockenträgers 3 bei Verdrehung der Nockenträger 3 und 5 relativ zueinander um die Drehachse 7 mit dem oder den Nocken 6 des weiteren Nockenträgers 4 aneinander entlang gleitend zusammenwirken. Aufgrund der fixen Befestigung der Nocken 4 und 6 auf dem jeweiligen Nockenträger 3 und 5 handelt es sich dabei, für den Fall dass die Nocken der beiden zueinander verdrehbaren Nockenträger 3 und 5 in Kontakt stehen, ausschließlich um eine Gleitbewegung. Es kommt also nicht zu einem Abrollen oder dergleichen. Im gezeigten Ausführungsbeispiel ist der erste Nockenträger 3 an einer bezüglich der Lenksäule 2 bzw. dem Konsolenteil 16 ortsfesten Seitenwange 12 drehfest gehalten. Der zweite bzw. weitere Nockenträger 5 hingegen ist drehfest an dem Betätigungshebel 9 angebracht. Dies hat zur Folge, dass bei einem Verschwenken des Betätigungshebels 9 um die koaxial zur Betätigungswelle 21 angeordnete Drehachse 7 die Nockenträger 3 und 5 um diese Drehachse 7 relativ zueinander verdreht werden. Durch das entsprechende Zusammenwirken ihrer Nocken 4 und 6 kommt es dadurch zu einem Hub in Längsrichtung der Drehachse 7, wodurch es je nach Hubrichtung, wie an sich bekannt, zu einem Spannen bzw. Schließen oder einem Entspannen bzw. Öffnen der Feststellvorrichtung 1 kommt. Konkret werden die beiden einander gegenüberliegenden Seitenwangen 12 beim Spannen bzw. Schließen gegeneinander bewegt, wie dies in der Explosionsdarstellung von Figur 12 mit den beiden gegeneinander gerichteten Pfeilen angedeutet ist, so dass die zwischen den Seitenwangen 12 befindliche Manteleinheit 13 bzw. die Kastenschwinge 25 in Position am Konsolenteil 16 festgeklemmt wird. In der Löseposition der Feststellvorrichtung 1 werden die Seitenwangen 12 entspannt, d.h. entgegen der Pfeilrichtung gelöst, und es stehen die bereits eingangs genannten Verstellmöglichkeiten zur Verfügung.

Alternative Feststellvorrichtungen - wie beispielsweise in der DE 44 00 306 A1 beschrieben - haben anstelle der Nockenträger 3 und 4 beispielsweise eine Kippstiftmechanik oder dergleichen, welche ebenfalls eine Drehung einer Betätigungswelle 21 in eine Klemmbewegung umsetzt.

Um die Bewegung der Feststellvorrichtung 1 zu vergleichsmäßigen, umfasst diese erfindungsgemäss einen Rotationsdämpfer 8, der im gezeigten Ausführungsbeispiel am Betätigungshebel 9 befestigt ist. Die mit dem Rotationsdämpfer 8 zusammenwirkende Betätigungsvorrichtung 10 ist im gezeigten Ausführungsbeispiel als Getrieberad 10 ausgebildet, welches drehfest an der Seitenwange 12 und damit am Konsolenteil 16 befestigt ist.

Der Aufbau des Rotationsdämpfers 8 wird im Folgenden anhand der Figuren 5, 6, 7 und 8 näher erläutert. Demnach weist der Rotationsdämpfer 8 ein Gehäuse 81 auf, welches an Befestigungslaschen 82 am Betätigungshebel 9 fixiert werden kann.

Das Gehäuse 81 hat einen konischen Innenraum 83 mit einer inneren Mantelfläche 84, welche eine Rotorachse R mantelförmig umgibt. Der konische Innenraum 83 zeichnet sich dadurch aus, dass der Durchmesser der inneren Mantelfläche auf der dem Deckel 87 zugewandten Seite größer ist als der Durchmesser auf der dem Deckel 87 abgewandten Seite. In dem Innenraum 83 ist um die Rotorachse R drehbar ein Rotor 800 drehbar gelagert, und zwar auf einem Achszapfen 85. An dem Rotor 800 ist ein zweites Getrieberad 86 drehfest koaxial angebracht. Dieses steht aus dem Gehäuse 81 durch einen Deckel 87 axial nach außen vor. Im montierten Zustand hält dieser Deckel 87 den Rotor 800 in axialer Richtung (in Richtung der Rotorachse R) im Innenraum 83 des Gehäuses. Wesentlich ist, dass der Innenraum 83 frei von Flüssigkeit ist, d.h. nicht mit flüssigem Dämpfungsfluid gefüllt ist.

Das zweite Getrieberad 86 steht mit dem ersten Getrieberad 10 in Eingriff. Wird nun der Betätigungshebel 9 zum Lösen oder Feststellen der Feststellvorrichtung 1 verschwenkt, bewegt sich die Rotorachse R des Rotationsdämpfers 8 um die Drehachse 7, wobei das zweite Getrieberad 86 mit der Verzahnung 11 des relativ zur besagten Bewegung des Rotationsdämpfers 8 ortsfesten ersten Getrieberads 10 kämmt. Folglich wird das zweite Getrieberad 86 um die Rotorachse R drehend angetrieben, wodurch der Rotor 800 ebenfalls in dem Innenraum 83 des Gehäuses 81 um die Rotorachse R rotiert.

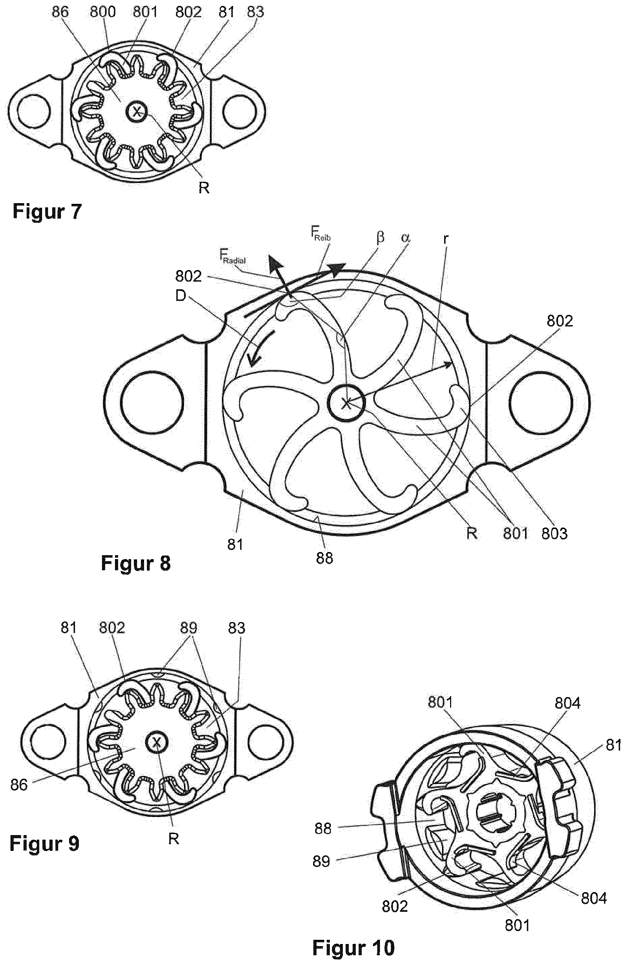

Figur 7 zeigt eine Ansicht in Richtung der Rotorachse R wie in Figur 5, wobei der Deckel 87 weggelassen ist und die Anordnung des Rotors 800 erkennbar ist, des teilweise vom zweiten Getrieberad 86 verdeckt ist.

Figur 8 zeigt eine schematische Ansicht ähnlich Figur 7, wobei zur besseren Erkennbarkeit von Details des Rotors 800 auch das zweite Getrieberad 86 weggelassen wurde.

In der dargestellten Ausführung weist der Rotor 800 insgesamt sechs gleichmäßig über den Umfang verteilte Lamellen 801 auf, die sternförmig von der Rotorachse R radial abstehen. Wie der perspektivischen Darstellung von Figur 6 entnehmbar ist, sind die Lamellen 801 als flache Streifen, in etwa blattförmig geformt, die sich axial in Richtung der Rotorachse R geradlinig, und in Radialrichtung bogenförmig erstrecken. Die bogenförmige Erstreckung ist anhand eines eingezeichneten Radius r erkennbar: Die Lamelle 801 ist in ihrem Verlauf gegen den Radius r in einer Drehrichtung D, die mit einem gebogenen Pfeil angedeutet ist, um einen Winkel α abgewinkelt, wobei gilt, dass α < 180°.

In radialer Richtung sind die Lamellen 801 so bemessen, dass sie jeweils mit einer Kontaktfläche 802 federbelastet von innen an der inneren Mantelfläche 84 des Gehäuses 81 anliegen. Die Kontaktflächen 802 sind bezüglich der Rotorachse R außen an Endbereichen der Lamellen 801 ausgebildet, die ebenfalls in Drehrichtung D abgewinkelt sind, und zwar um einen Winkel β, wobei gilt β > 90°, so dass jede Kontaktfläche 802 radial nach außen gerichtet an der inneren Mantelfläche 84 anliegt. Daraus folgt, dass bei einer Drehung des Rotors 800 die Kontaktflächen 802 auf einem umlaufenden Flächenbereich der inneren Mantelfläche 84 ununterbrochen entlanggleiten bzw. -schleifen, wobei dieser von den Kontaktflächen überstrichene Flächenbereich die sogenannte Kontaktbahn 88 bildet, deren Breite in Richtung der Rotorachse R mit der Breite der Kontaktflächen 802 an den Lamellen 801 übereinstimmt. Dadurch, dass der Innenraum 83 frei von Flüssigkeit ist, d.h. nicht mit flüssigem Dämpfungsfluid gefüllt ist, wird die Dämpfung ausschließlich durch trockene Reibung der Kontaktfläche 802 auf der Kontaktbahn 88 bestimmt.

Bevorzugt hat der Rotor 800 im entspannten, d.h. in unmontiertem Zustand außerhalb des Gehäuses 81 ein leichtes Übermaß relativ zum Innendurchmesser der inneren Mantelfläche 84 des Gehäuses 81, d.h. die Kontaktflächen 802 stehen radial etwas weiter als der Radius r vor. Durch die Gestaltung der Lamellen 801 hinsichtlich ihres Querschnitts und des verwendeten Materials, beispielsweise Kunststoff wie thermoplastisches Elastomer oder dergleichen, sind sie biegeelastisch nach Art einer Blattfeder bzw. eines Federblatts. Durch den bogenförmigen Verlauf können die Kontaktflächen 802 elastisch radial in Richtung der Rotorachse R zusammengedrückt werden, so dass der Rotor 800 axial in den Innenraum 83 eingeführt werden kann. In eingesetztem Zustand werden die Kontaktflächen 802 entsprechend mit einer Federkraft im Bereich der Kontaktbahn 88 gegen die innere Mantelfläche 84 angedrückt.

Wie bereits erläutert bewegen sich bei einer Drehung des Rotors 800 die Kontaktflächen 802 reibend auf der Kontaktbahn 88 der inneren Mantelfläche 84 entlang, wobei die zwischen den Kontaktflächen 802 und der Mantelfläche 84 auftretende Reibungskraft die Drehbewegung des Rotors 800 bremst, mit anderen Worten den Rotor 800 dämpft. Die Höhe der dabei wirkenden effektiven Reibungskraft ist bei statischer Betrachtung zunächst abhängig von der relativen Flächenpressung, welche abhängig ist von der vorangehend erläuterten Federkraft, die von den elastischen Lamellen 801 auf die Kontaktflächen 802 ausgeübt wird.

Bei der erfindungsgemäßen Ausgestaltung des Rotors 800 kommt zusätzlich noch eine dynamische Reibungskraft hinzu: Bei einer Drehung in Drehrichtung D wirkt auf jede Kontaktfläche 802 eine Reibungskraft F_{reib} in entgegengesetzter Umfangsrichtung, wie an dem eingezeichneten Kraftvektor ersichtlich ist. Durch die abgewinkelte Anbringung der Kontaktfläche 802 wird durch die Lamelle 801 ein Teil der Reibungskraft F_{reib} in eine Radialkraftkomponente F_{radial} umgesetzt, die in radialer Richtung die Kontaktfläche 802 zusätzlich gegen die Kontaktbahn 88 der Mantelfläche 84 andrückt. Folglich wird die effektive Reibung zwischen Rotor 800 und Gehäuse 81 bei einer Drehung des Rotors 800 in Drehrichtung D erhöht, was zu entsprechend einer geschwindigkeitsabhängig erhöhten Bremswirkung und damit stärkeren Dämpfung führt.

Bei einer Drehung in Rückdrehrichtung -D entgegen der Drehrichtung D tritt die vorangehend erläuterte dynamische Verstärkung der Reibungskraft nicht auf. Durch die in umgekehrter Richtung auftretenden Reibungskräfte ergibt sich sogar eine Entlastung der Kontaktfläche 802, d.h. die Kontaktflächen 802 gleiten leichter über die Kontaktbahn 88, so dass praktisch ein Freilauf in Rückdrehrichtung realisiert wird.

Eine zweite Ausführungsform eines erfindungsgemäßen Rotationsdämpfers 8 ist in Figur 9 in derselben Ansicht wie in Figur 7 dargestellt. Zur Verstärkung der Bremswirkung sind dabei radial nach innen vorspringende, hügelartig abgerundete Vorsprünge 89 auf der inneren Mantelfläche 84 im Bereich der Kontaktbahn 88 angeordnet. Bei einer Drehung gleiten die Kontaktflächen 802 über die auf diese Weise gebildete Kulissenfläche und müssen die Vorsprünge 89 überwinden. Dadurch wird das Bremsmoment bzw. die Dämpfungswirkung verstärkt.

Der Darstellung in Figur 10 und 11 ist entnehmbar, dass auf einer Stirnseite des Rotors 800 zusätzliche Federelemente 804 angebracht sind in Form von rippenartigen Vorspüngen, welche zumindest abschnittweise der abgewinkelten Form der Lamellen 801 folgen. Mittels dieser zusätzlichen Federelemente 804 kann die Elastizität der Lamellen 801 vorgegeben und damit die Federkraft, mit der die Kontaktflächen 802 gegen die Kontaktbahn 88 angedrückt werden, gegebenenfalls verstärkt werden.

In Figur 12 und 13 ist eine alternative Ausführung einer erfindungsgemäßen Feststellvorrichtung 1 schematisch angegeben. Dabei sind in an sich bekannter Weise die Betätigungswelle 21 mit dem drehfest angebrachten Betätigungshebel 9 und den Nockenträgern 3 und 5, deren Funktion weiter oben bereits ausführlich erläutert worden ist, angeordnet. Die Betätigungswelle 21 ist durch die beiden gegenüberliegenden Seitenwangen 12 hindurchgeführt. Auf der gegenüberliegenden Seite, auf der dem Betrachter in der Zeichnung zugewandten Seitenwange 12 ist die Betätigungswelle 21 in einem zur Höhenverstellung in der Höhenverstellrichtung 20 in unterschiedlichen Höhen an der Seitenwange 12 festlegbaren Lagereinheit 27 gelagert und unter Zwischenlage eines Gleitrings 28 mittels eines Befestigungselements 29, bevorzugt einer Sechskantmutter mit Innengewinde 29, in axialer Richtung der Drehachse 7 gesichert.

Erfindungsgemäß ist ein Rotationsdämpfer 8 mit der Betätigungswelle 21 gekoppelt. Anders als im ersten dargestellten Beispiel ist hierbei das Gehäuse 81 mittels Befestigungselementen 28 drehfest an der Lagereinheit 27 fixiert, die ihrerseits drehfest an der Seitenwange 12 des Konsolenteils 16 festlegbar ist. Das Befestigungselement (Mutter) 29 ist drehmomentschlüssig mit dem im Inneren des Gehäuses 81 angeordneten Rotor 800 verbunden, der koaxial zur Betätigungswelle 21 angeordnet ist, d.h. seine Rotorachse R ist mit der Drehachse 7 identisch. Die drehmomentschlüssige Verbindung kann beispielsweise erfolgen, indem das Befestigungselement als Sechskant-Mutter ausgebildet ist, die in eine korrespondierende Sechskant-Öffnung 805 in dem Rotor 800 formschlüssig eingreift.

Im Prinzip ist die Funktion hinsichtlich der Dämpfung identisch wie bei der oben beschriebenen Ausführung, wobei im Unterschied dazu die Kopplung des Rotors 800 an die Betätigungswelle 21 nicht über zwischengeschaltete Getrieberäder 10 und 86, sondern durch unmittelbare Befestigung an der Betätigungswelle 21 erfolgt.

## Patentansprüche

1. Feststellvorrichtung (1) für eine verstellbare Lenksäule (2) für ein Kraftfahrzeug, mit einer um eine Drehachse (7) drehbar gelagerten Betätigungswelle (21), die mit einem Wirkelement (3, 5) einer Klemmvorrichtung verbunden ist und die mit einem Rotor (800) eines Rotationsdämpfers (8) gekoppelt ist, wobei der Rotor (800) in einem Gehäuse (81) drehbar gelagert ist und mittels der Betätigungswelle (21) um eine Rotorachse (R) drehend antreibbar ist, wobei eine Drehbewegung des Rotors (800) in zumindest einer Drehrichtung (D) gedämpft ist,
wobei der Rotationsdämpfer (8) als trockener Rotationsdämpfer (8) ausgebildet ist,
**dadurch gekennzeichnet,**
**dass** der Rotor (800) zumindest eine bezüglich der Rotorachse (R) radial abstehende Lamelle (801) hat, an der eine Kontaktfläche (802) ausgebildet ist, welche reibschlüssig eine Kontaktbahn (88) auf einer Innenfläche (84) des Gehäuses (81) kontaktiert, wobei die Dämpfung durch die trockene Reibung der Kontaktfläche (802) auf der Kontaktbahn (88) bestimmt ist.

2. Feststellvorrichtung nach Anspruch 1, **dadurch gekennzeichnet, dass** die Kontaktbahn (88) auf einer den Rotor (800) umgebenden inneren Mantelfläche (84) ausgebildet ist, die eine im Wesentlichen zylindrische, zur Rotorachse (R) koaxiale Grundform hat.

3. Feststellvorrichtung nach Anspruch 1, **dadurch gekennzeichnet, dass** die Kontaktbahn (88) auf einer den Rotor (800) umgebenden inneren Mantelfläche (84) ausgebildet ist, die eine konische, zur Rotorachse (R) koaxiale Grundform hat.

4. Feststellvorrichtung nach Anspruch 1, **dadurch gekennzeichnet, dass** die Lamelle (801) zumindest ein Federelement umfasst, welches die Kontaktfläche (802) gegen die Kontaktbahn (88) vorspannt.

5. Feststellvorrichtung nach Anspruch 4, **dadurch gekennzeichnet, dass** die Lamelle (801) im Bereich zwischen der Rotorachse (R) und der Kontaktfläche (802) als Blattfeder ausgebildet ist, welche sich zumindest abschnittweise relativ zu einer Radialrichtung in einer ersten Umfangsrichtung (D) geneigt erstreckt.

6. Feststellvorrichtung nach Anspruch 1, **dadurch gekennzeichnet, dass** die Kontaktfläche (802) im Querschnitt bogenförmig ausgebildet ist, wobei der Bogen zur Rotorachse (R) hin offen ist und einen kleineren Biegeradius hat als die Kontaktbahn (88).

7. Feststellvorrichtung nach Anspruch 1, **dadurch gekennzeichnet, dass** auf der Kontaktbahn (88) Strukturelemente (89) ausgebildet sind.

8. Feststellvorrichtung nach Anspruch 1, **dadurch gekennzeichnet, dass** der Rotor (800) drehfest auf der Betätigungswelle (21) angebracht ist.

9. Feststellvorrichtung nach Anspruch 1, **dadurch gekennzeichnet, dass** auf dem Rotor (800) ein zweites Getrieberad (86) drehfest angebracht ist, welches mit einem ersten Getrieberad (10) in Eingriff steht, wobei das zweite Getrieberad (86) relativ zu dem ersten Getrieberad (10) mittels der Betätigungswelle (21) drehend antreibbar ist.

10. Feststellvorrichtung nach Anspruch 1, **dadurch gekennzeichnet, dass** der Rotor (800) und/oder das Gehäuse (81) und/oder das Getrieberad (86) als Kunststoff-Spritzgussteil ausgebildet ist.

## Claims

1. Locking device (1) for an adjustable steering column (2) for a motor vehicle, having an actuating shaft (21) which is mounted such that it can be rotated about a rotational axis (7), is connected to an operative element (3, 5) of a clamping device, and is coupled to a rotor (800) of a rotational damper (8), the rotor (800) being mounted rotatably in a housing (81) and being capable of being driven rotationally about a rotor axis (R) by means of the actuating shaft (21), a rotational movement of the rotor (800) being damped in at least one rotational direction (D),
wherein the rotational damper (8) is configured as a dry rotational damper (8),
**characterized**
**in that** the rotor (800) has at least one blade (801) which projects radially with regard to the rotor axis (R) and on which a contact face (802) is configured which makes frictional contact with a contact track (88) on an inner face (84) of the housing (81), the damping action being defined by the dry friction of the contact face (802) on the contact track (88).

2. Locking device according to Claim 1, **characterized in that** the contact track (88) is configured on an inner circumferential face (84) which surrounds the rotor (800) and has a substantially cylindrical basic shape which is coaxial with respect to the rotor axis (R).

3. Locking device according to Claim 1, **characterized in that** the contact track (88) is configured on an inner circumferential face (84) which surrounds the rotor (800) and has a conical basic shape which is coaxial with respect to the rotor axis (R) .

4. Locking device according to Claim 1, **characterized in that** the blade (801) comprises at least one spring element which prestresses the contact face (802) against the contact track (88).

5. Locking device according to Claim 4, **characterized in that** the blade (801) is configured as a leaf spring in the region between the rotor axis (R) and the contact face (802), which leaf spring extends at least in sections in an inclined manner in a first circumferential direction (D) relative to a radial direction.

6. Locking device according to Claim 1, **characterized in that** the contact face (802) is of arcuate configuration in cross section, the arc being open toward the rotor axis (R) and having a smaller bending radius than the contact track (88).

7. Locking device according to Claim 1, **characterized in that** structural elements (89) are configured on the contact track (88).

8. Locking device according to Claim 1, **characterized in that** the rotor (800) is attached fixedly on the actuating shaft (21) so as to rotate with it.

9. Locking device according to Claim 1, **characterized in that** a second gearwheel (86) is attached fixedly on the rotor (800) so as to rotate with it, which second gearwheel (86) is in engagement with a first gearwheel (10), it being possible for the second gearwheel (86) to be driven rotationally relative to the first gearwheel (10) by means of the actuating shaft (21).

10. Locking device according to Claim 1, **characterized in that** the rotor (800) and/or the housing (81) and/or the gearwheel (86) are/is configured as a plastic injection molded part.

## Revendications

1. Dispositif de blocage (1) pour une colonne de direction réglable (2) de véhicule automobile, avec un arbre d'actionnement (21) monté de façon rotative autour d'un axe de rotation (7), qui est relié à un élément actif (3, 5) d'un dispositif de serrage et qui est couplé à un rotor (800) d'un amortisseur rotatif (8), dans lequel le rotor (800) est monté de façon rotative dans un boîtier (81) et peut être entraîné en rotation autour d'un axe de rotor (R) au moyen de l'arbre d'actionnement (21), dans lequel un mouvement de rotation du rotor (800) est amorti dans au moins un sens de rotation (D), dans lequel l'amortisseur rotatif (8) est constitué par un amortisseur rotatif sec (8), **caractérisé en ce que** le rotor (800) comporte au moins une lamelle (801) saillante radialement par rapport à l'axe de rotation (R), sur laquelle est formée une face de contact (802), qui contacte avec frottement une piste de contact (88) sur une face intérieure (84) du boîtier (81), dans lequel l'amortissement est déterminé par le frottement sec de la face de contact (802) sur la piste de contact (88).

2. Dispositif de blocage selon la revendication 1, **caractérisé en ce que** la piste de contact (88) est formée sur une face latérale intérieure (84) entourant le rotor (800), qui a une forme de base essentiellement cylindrique, coaxiale à l'axe de rotor (R).

3. Dispositif de blocage selon la revendication 1, **caractérisé en ce que** la piste de contact (88) est formée sur une face latérale intérieure (84) entourant le rotor (800), qui a une forme de base conique, coaxiale à l'axe de rotor (R).

4. Dispositif de blocage selon la revendication 1, **caractérisé en ce que** la lamelle (801) comprend au moins un élément de ressort, qui précontraint la face de contact (802) contre la piste de contact (88).

5. Dispositif de blocage selon la revendication 4, **caractérisé en ce que** la lamelle (801) est formée, dans la région comprise entre l'axe de rotor (R) et la face de contact (802), sous forme de ressort à lame, qui s'étend au moins localement de façon inclinée par rapport à une direction radiale dans une première direction périphérique (D).

6. Dispositif de blocage selon la revendication 1, **caractérisé en ce que** la face de contact (802) a une section transversale en forme d'arc, dans lequel l'arc est ouvert en direction de l'axe de rotor (R) et présente un plus petit rayon de courbure que la piste de contact (88).

7. Dispositif de blocage selon la revendication 1, **caractérisé en ce que** des éléments de structure (89) sont formés sur la piste de contact (88).

8. Dispositif de blocage selon la revendication 1, **caractérisé en ce que** le rotor (800) est calé en rotation sur l'arbre d'actionnement (21).

9. Dispositif de blocage selon la revendication 1, **caractérisé en ce qu'**une deuxième roue dentée (86), qui est en prise avec une première roue dentée (10), est montée sans rotation sur le rotor (800), dans lequel la deuxième roue dentée (86) peut être entraînée en rotation par rapport à la première roue dentée (10) au moyen de l'arbre d'actionnement (21).

10. Dispositif de blocage selon la revendication 1, **caractérisé en ce que** le rotor (800) et/ou le boîtier (81) et/ou la roue dentée (86) sont des pièces en matière plastique moulées par injection.
